# EUROPEAN PATENT SPECIFICATION

(11) **EP 3 892 677 B1**
(45) Date of publication and mention of the grant of the patent: **31.12.2025**
(21) Application number: 19891907.8
(22) Date of filing: 03.12.2019
(51) Int. Cl.: C08K 7/14, C08L 81/02, C08L 91/06, C08J 5/04, C08K 3/26, C08K 3/34

(54) **RESIN COMPOSITION AND MOLDED BODY THEREOF**
HARZZUSAMMENSETZUNG UND FORMKÖRPER DARAUS
COMPOSITION DE RÉSINE ET CORPS MOULÉ DE CETTE DERNIÈRE

(30) Priority: 06.12.2018 JP 2018228845
(43) Date of publication of application: 13.10.2021
(73) Proprietor: DIC Corporation, Tokyo 174-8520 (JP)
(72) Inventor: NISHIDA,Takuya, Ichihara-shi, Chiba 290-8585 (JP)
(74) Representative: Kraus & Lederer PartGmbB
(86) International application number: PCT/JP2019/047180
(87) International publication number: WO 2020/116434

(56) References cited:
- WO-A1-2013/099234
- WO-A1-2013/191207
- WO-A1-2017/069109
- WO-A1-2017/069109
- JP-A- 2003 221 454
- JP-A- 2016 132 710
- JP-A- 2016 132 710
- JP-A- 2016 183 316
- JP-A- H0 559 279
- JP-A- H10 213 993

## Description

### Technical Field

The present invention relates to a resin composition containing a polyarylene sulfide resin, and a molded article obtained by molding the resin composition.

### Background Art

Polyarylene sulfide (hereinafter, frequently referred to as "PAS") resins, such as a polyphenylene sulfide (hereinafter, frequently referred to as "PPS") resin, are known as an engineering plastic exhibiting such excellent heat resistance that it can have a melting point as high as 270°C or more. Molded articles using a PAS resin as a raw material are generally produced by subjecting a resin composition containing a PAS resin to melt-molding, such as injection molding or extrusion molding, but the PAS resin has a high melting point and a low melt viscosity so that the resin easily flows, and therefore the resin composition containing such a PAS resin is likely to cause a problem of drooling (which is called "tare" or "hanatare") of the resin composition upon melt-molding from the cylinder nozzle tip of a molding machine.

In PTL 1 shown below, there is a description about a technique in which a polyarylene sulfide (A), a glass fiber (B) having the surface treated with a sizing agent containing an epoxy resin, an urethane resin, and a silane coupling agent, a silane coupling agent (C) having at least one functional group selected from the group consisting of an amino group and an epoxy group, and 0.5 to 3 parts by weight of synthetic zeolite (D) having a pore diameter of 4 to 10 Å and a specific surface area of 200 m²/g or more are incorporated into a polyarylene sulfide composition for the purpose of reducing the generated gas and resin.

### Citation List

### Patent Literature

PTL 1: JP-A-2016-132710

### Summary of Invention

### Technical Problem

The present inventor has made extensive and intensive studies on the technique described in PTL 1 above, and has found that, when the resin composition containing a PAS resin is subjected to melt-molding, the technique cannot satisfactorily achieve prevention of drooling of the resin composition. Further, in recent years, parts produced by melt-molding have a complicated structure, and the resin composition used for the parts is generally required to be increased in the flowability of the resin composition upon melt-molding. For achieving such an increased flowability, the molding temperature during the melt-molding (cylinder temperature of an injection molding machine or an extrusion molding machine) is generally set to be a high temperature, but, in this case, further marked drooling of the resin composition tends to occur.

JP H10 213993 A describes polyphenylene sulfide compositions which do not cause significant drooling during injection molding.

In view of the above, the present invention has been developed, and a task of the invention is to provide a resin composition achieving excellent prevention of drooling during the melt-molding, and a molded article of the resin composition.

### Solution to Problem

The present inventors have conducted extensive and intensive studies with a view toward solving the above-mentioned problems and specifying the factors which affect drooling of the resin composition containing a PAS resin. As a result, it has been found that two factors, i.e., "the melt viscosity of the resin composition in a low-shear region" and "the melt crystallization temperature of the resin composition" largely affect drooling of the resin composition, and the present invention has been completed.

Specifically, the present invention is directed to a resin composition containing a polyarylene sulfide resin (A), zeolite (B), a glass fiber (C), calcium carbonate (D) and an olefin polymer, wherein the mass ratio of the glass fiber (C) to the calcium carbonate (D) ((C)/(D)) is in the range of 1 to 13 and the amount of the glass fiber (C) is 100 parts by mass or less relative to 100 parts by mass of the whole amount of the polyarylene sulfide resin (A).

The resin composition of the invention contains a glass fiber (C) and calcium carbonate (D) in addition to the PAS resin, and the mass ratio of the glass fiber (C) to the calcium carbonate (D) ((C)/(D)) is optimized to be in the range of 1 to 13. As a result, the melt viscosity of the resin composition in a low-shear region can be increased. Further, the resin composition of the invention contains zeolite (B) in addition to the PAS resin. Therefore, the melt crystallization temperature of the resin composition can be increased, facilitating crystallization of the resin composition. Thus, the resin composition of the invention can achieve both an increase of the melt viscosity of the resin composition in a low-shear region and an increase of the melt crystallization temperature of the resin composition, and therefore excellent prevention of drooling of the resin composition during the melt-molding is achieved.

It is preferred that the resin composition further contains a wax (E) having an acid value of 15 or less.

For improving the release properties of the resin composition in the cylinder used in the melt-molding or in the mold for injection, it is preferred that a wax is incorporated into the resin composition, but, especially in the cylinder in which the resin composition is exposed to conditions at a high temperature and pressure, the wax is likely to be decomposed, so that the gas generated due to decomposition of the wax causes marked drooling of the resin composition. However, in the present invention, even when the wax (E) is incorporated into the resin composition, the acid value of the wax is set at 15 or less, and therefore the generation of gas caused due to decomposition of the wax can be suppressed, so that an increase of the pressure in the cylinder is suppressed, making it possible to suppress marked drooling of the resin composition.

It is preferred that the resin composition is a melt-kneaded mixture.

Further, the present invention is directed to a molded article which is obtained by molding the above-mentioned resin composition. The resin composition which is a raw material for the molded article can achieve contradictory properties, specifically, both prevention of drooling during the melt-molding and molding flowability, and therefore the molded article produced by melt-molding the resin composition can have a complicated shape.

Further, the present invention is directed to a method for producing a resin composition, the method having the step of melt-kneading a polyarylene sulfide resin (A), zeolite (B), a glass fiber (C), calcium carbonate (D) and an olefin polymer at the melting point of the polyarylene sulfide resin (A) or higher, wherein the mass ratio of the glass fiber (C) to the calcium carbonate (D) ((C)/(D)) is in the range of 1 to 13 and the amount of the glass fiber (C) is 100 parts by mass or less relative to 100 parts by mass of the whole amount of the polyarylene sulfide resin (A). It is preferred that the method for producing a resin composition has the step of melting the resin composition in a shear region at a shear rate of 500 sec⁻¹ or less. In the method for producing a resin composition of the invention, even in the step of melting the resin composition in such a shear region, a high melt viscosity of the resin composition can be maintained.

Further, the present invention is directed to a method for producing a molded article, the method having the steps of: producing a resin composition by the above-mentioned method; and melt-molding the resin composition. It is preferred that the method for producing a molded article has the step of melting the resin composition in a shear region at a shear rate of 500 sec⁻¹ or less. In the method for producing a molded article of the invention, even in the step of melting the resin composition in such a shear region, a high melt viscosity of the resin composition can be maintained, and therefore contradictory properties, specifically, both prevention of drooling during the melt-molding and molding flowability can be achieved. As a result, the molded article produced by melt-molding the resin composition can have a complicated shape.

### Description of Embodiments

The resin composition of the present invention contains a polyarylene sulfide resin (A), zeolite (B), a glass fiber (C), calcium carbonate (D) and an olefin polymer, and preferably further contains a wax (E). Hereinbelow, the constituents of the resin composition will be individually described.

### <Polyarylene sulfide (PAS) resin (A)>

The PAS resin (A) used in the invention has a resin structure in which a structure having an aromatic ring and a sulfur atom bonded to each other constitutes repeating units, specifically, the PAS resin (A) is a resin having a structural site represented by the following general formula (1): 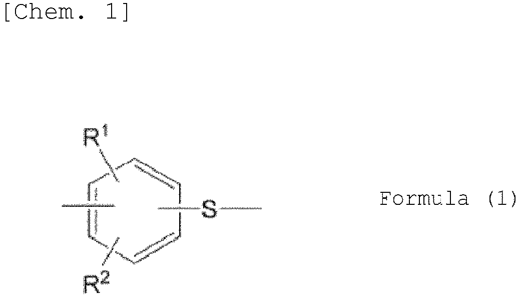 wherein each of R¹ and R² independently represents a hydrogen atom, an alkyl group having 1 to 4 carbon atoms, a nitro group, an amino group, a phenyl group, a methoxy group, or an ethoxy group
and, if necessary, further a trifunctional structural site represented by the following general formula (2): 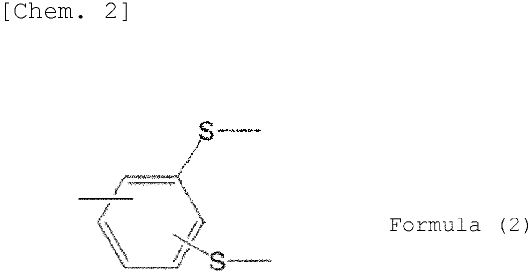 as repeating units. The amount of the trifunctional structural site represented by the formula (2), based on the total mole of the trifunctional structural site and the other structural sites, is preferably 0.001 mol% or more, more preferably 0.01 mol% or more, and is preferably 3 mol% or less, more preferably 1 mol% or less.

With respect to the structural site represented by the general formula (1) above, particularly, R¹ and R² in the general formula (1) are preferably a hydrogen atom in view of the mechanical strength of the PAS resin (A), and, as examples of the structural site in such a case, there can be mentioned a structural site represented by the following formula (3) in which the sulfur atom is bonded to the aromatic ring at the para-position, and a structural site represented by the following formula (4) in which the sulfur atom is bonded to the aromatic ring at the meta-position.

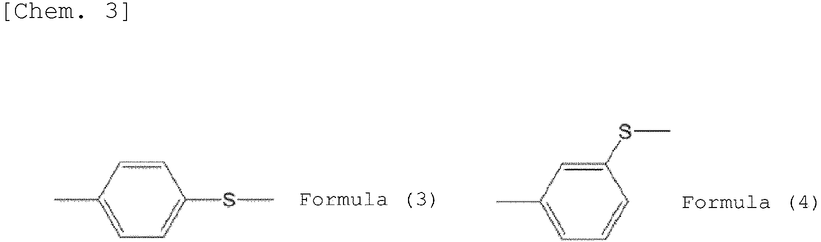

Of these, particularly, with respect to the bonding of the sulfur atom to the aromatic ring in the repeating units, the structure represented by the general formula (3) above in which the sulfur atom is bonded to the aromatic ring at the para-position is preferred in view of the heat resistance and crystalline properties of the PAS resin (A).

Further, the PAS resin (A) may contain not only the structural sites represented by the general formulae (1) and (2) above but also structural sites represented by the following structural formulae (5) to (8): 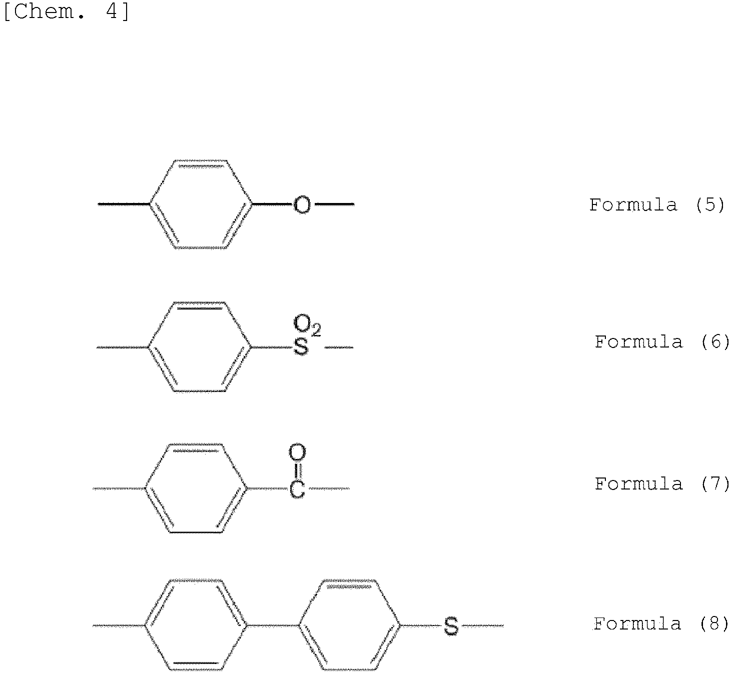 in an amount of 30 mol% or less of the total of the structural site represented by the general formula (1) and the structural site represented by the general formula (2). Particularly, in the invention, the amount of the structural sites represented by the general formulae (5) to (8) above is preferably 10 mol% or less in view of the heat resistance and mechanical strength of the PAS resin (A). When the PAS resin (A) contains the structural sites represented by the general formulae (5) to (8) above, the bonding of these sites may be any of a random copolymer and a block copolymer.

Further, the PAS resin (A) may have in the molecular structure thereof a naphthyl sulfide bond or the like, but the amount of the naphthyl sulfide bond or the like, based on the total mole of the naphthyl sulfide bond or the like and the other structural sites, is preferably 3 mol% or less, especially preferably 1 mol% or less.

### (Method for producing the PAS resin)

With respect to the method for producing the PAS resin (A), there is no particular limitation, but there can be mentioned, for example, 1) a method in which a dihalogeno aromatic compound and, if necessary, a polyhalogeno aromatic compound or another copolymerizable component are subjected to polymerization in the presence of sulfur and sodium carbonate, 2) a method in which a dihalogeno aromatic compound and, if necessary, a polyhalogeno aromatic compound or another copolymerizable component are subjected to polymerization in a polar solvent in the presence of a sulfidating agent or the like, 3) a method in which p-chlorothiophenol and, if necessary, another copolymerizable component are subjected to self-condensation, and 4) a method in which a diiodo aromatic compound and sulfur in the form of a simple substance are subjected to melt polymerization in the presence of a polymerization inhibitor optionally having a functional group, such as a carboxyl group or an amino group, under a reduced pressure. Of these methods, the method 2) is generally used and preferred. In the reaction, for controlling the degree of polymerization, an alkali metal of a carboxylic acid or sulfonic acid, or an alkali hydroxide may be added. Particularly preferred is the PAS resin obtained by the method 2), especially a method in which a water-containing sulfidating agent is introduced into a heated mixture containing an organic polar solvent and a dihalogeno aromatic compound at such a rate that water can be removed from the reaction mixture, and the dihalogeno aromatic compound and the sulfidating agent and, if necessary, a polyhalogeno aromatic compound are subjected to reaction in the organic polar solvent while controlling the water content in the reaction system to be in the range of 0.02 to 0.5 mol, relative to 1 mol of the organic polar solvent, then producing a PAS resin (see JP-A-07-228699), or a method in which a dihalogeno aromatic compound and, if necessary, a polyhalogeno aromatic compound or another copolymerizable component, and an alkali metal hydrogensulfide and an organic acid alkali metal salt are subjected to reaction in the presence of an alkali metal sulfide in a solid form and an aprotic polar organic solvent while controlling the organic acid alkali metal salt to be in the range of 0.01 to 0.9 mol, relative to 1 mol of the sulfur source, and the water content in the reaction system to be in the range of 0.02 mol or less, relative to 1 mol of the aprotic polar organic solvent (see WO2010/058713 pamphlet). Specific examples of dihalogeno aromatic compounds include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and the above compounds each having in the aromatic ring thereof an alkyl group having 1 to 18 carbon atoms, and examples of polyhalogeno aromatic compounds include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. Further, the halogen atom contained in the above-mentioned compounds is preferably a chlorine atom or a bromine atom.

With respect to the after-treatment method for the reaction mixture containing the PAS resin obtained in the polymerization step, there is no particular limitation, but there can be mentioned, for example, (1) a method in which, after completion of the polymerization reaction, the solvent is first distilled off from the reaction mixture as such, or the reaction mixture after an acid or a base is added thereto, under a reduced pressure or under atmospheric pressure, and then the solid material obtained after distilling off the solvent is washed with a solvent, such as water, the reaction solvent (or an organic solvent having an equivalent solubility for a low-molecular weight polymer), acetone, methyl ethyl ketone, or an alcohol, once or two or more times, and further subjected to neutralization, washing with water, filtration, and drying, (2) a method in which, after completion of the polymerization reaction, a solvent (a solvent which is soluble in the polymerization solvent used, and which is a poor solvent with respect to at least the PAS), such as water, acetone, methyl ethyl ketone, an alcohol, an ether, a halogenated hydrocarbon, an aromatic hydrocarbon, or an aliphatic hydrocarbon, is added as a precipitant to the reaction mixture to cause the products in the solid state including the PAS and an inorganic salt to precipitate, and the resultant precipitates are subjected to filtration, washing, and drying, (3) a method in which, after completion of the polymerization reaction, the reaction solvent (or an organic solvent having an equivalent solubility for a low-molecular weight polymer) is added to the reaction mixture and the resultant mixture is stirred, and then subjected to filtration to remove the low-molecular weight polymer, and then washed with a solvent, such as water, acetone, methyl ethyl ketone, or an alcohol, once or two or more times, and then subjected to neutralization, washing with water, filtration, and drying, (4) a method in which, after completion of the polymerization reaction, water is added to the reaction mixture and the reaction mixture is washed with water and subjected to filtration and, if necessary, during the washing with water, an acid is added to the reaction mixture for an acid treatment, followed by drying, and (5) a method in which, after completion of the polymerization reaction, the reaction mixture is subjected to filtration and, if necessary, washed with the reaction solvent once or two or more times, and further subjected to washing with water, filtration, and drying.

In the after-treatment methods as mentioned in the items (1) to (5) above, the PAS resin (A) may be dried in a vacuum or may be dried in air or in an atmosphere of an inert gas, such as nitrogen gas.

### <Zeolite (B)>

The zeolite (B) is a crystalline aluminosilicate, which is a known material represented by the following general formula.

x(M^{I}2, M^{II})O•Al₂O₃•nSiO₂•mH₂O

In the above formula, M^{I} represents a monovalent metal, for example, an alkali metal, such as Li, Na, or K, or ammonium, an alkylammonium, pyridinium, anilinium, a hydrogen ion, or the like, and M^{II} represents a bivalent metal, for example, an alkaline earth metal, such as Ca, Mg, Ba, or Sr. From the viewpoint of efficiently controlling the melt crystallization temperature, it is preferred that M^{II} is Ca and substantially no M^{I} is present.

With respect to the zeolite (B) used in the invention, any of natural zeolite and synthetic zeolite can be used. Examples of natural zeolite include analcite, wairakite, natrolite, mesolite, thomsonite, gonnardite, scolecite, edingtonite, gismondine, laumontite, mordenite, yugawaralite, erionite, ashcroftine, heulandite, clinoptilolite, stilbite, epistilbite, d'achiardite, phillipsite, harmotome, gmelinite, chabazite, and faujasite. Examples of synthetic zeolite include A-type, X-type, Y-type, L-type, mordenite, and chabazite. Of the above zeolite, synthetic zeolite is preferably used. With respect to the synthetic zeolite, commercially available synthetic zeolite can be used, and examples include A-type Zeolite A-4 powder, A-type Zeolite A-5 powder (each of which is a trademark; manufactured by Tosoh Corp.), CS-100, CS-100S (each of which is a trademark; manufactured by Katsuta Kako Co., Ltd.), AMT-25 (trademark; manufactured by Mizusawa Industrial Chemicals, Ltd.), and Mizukalizer ES (trademark; manufactured by Mizusawa Industrial Chemicals, Ltd.).

From the viewpoint of increasing the melt crystallization temperature of the resin composition, the zeolite (B) is preferably in the form of powder particles, and the upper limit of the range of the average particle diameter of the particles is preferably 3 µm, especially preferably 2 µm. The average particle diameter is a value (D₅₀) determined by a Coulter counter method. The lower limit of the range of the average particle diameter of the zeolite (B) is preferably 0.1 µm.

From the viewpoint of increasing the melt crystallization temperature of the resin composition, the amount of the zeolite (B) contained in the resin composition of the invention, relative to 100 parts by mass of the whole amount of the PAS resin (A), is preferably 20 parts by mass or less, preferably 10 parts by mass or less. Further, from the viewpoint of causing the zeolite (B) to effectively act as a nucleating agent for the PAS resin (A) so as to increase the melt crystallization temperature of the resin composition, the amount of the zeolite (B) contained is preferably 1 part by mass or more.

### <Glass fiber (C)>

With respect to the glass fiber (C), one which has been known to those skilled in the art can be used, and the fiber diameter, fiber length, and aspect ratio of the glass fiber and the like can be appropriately selected according to the use of the molded article or the like. For improving the dispersibility in the PAS resin (A), for example, the glass fiber (C) may be subjected to surface treatment with a known coupling agent, binder or the like. The lower limit of the range of the amount of the glass fiber (C) contained in the resin composition of the invention, relative to 100 parts by mass of the whole amount of the PAS resin (A), is preferably 32 parts by mass, more preferably 48 parts by mass. Further, the upper limit of the range of the amount is 100 parts by mass. When the amount of the glass fiber (C) contained is designed to be in the above range, both the molding flowability and the mechanical strength of the molded article can be improved with good balance. The mass ratio of the glass fiber (C) to the calcium carbonate (D) ((C)/(D)) is described later.

### <Calcium carbonate (D)>

For improving the prevention of drooling of the resin composition containing a PAS resin, an increase of the melt viscosity of the resin composition in a low-shear region is important as mentioned above. When the resin composition causes drooling, the resin composition is in a state such that substantially no shear is applied to the resin composition, and therefore an increase of the melt viscosity of the resin composition, especially the melt viscosity in a low-shear region is important. In the invention, the term "low-shear region" means a region at a shear rate of 500 sec⁻¹ or less, more preferably a region at 100 sec⁻¹ or less. In the invention, the calcium carbonate (D) is incorporated into the resin composition and the amount of the calcium carbonate (D) incorporated is selected so that the mass ratio of the glass fiber (C) to the calcium carbonate (D) ((C)/(D)) becomes in the range of 1 to 13. For further increasing the melt viscosity of the resin composition in a low-shear region, the lower limit of the range of the above-mentioned mass ratio ((C)/(D)) is preferably 1.2, more preferably 1.4. On the other hand, the upper limit of the range of the mass ratio ((C)/(D)) is preferably 11, more preferably 9. The lower limit of the range of the amount of the calcium carbonate (D) incorporated, relative to 100 parts by mass of the whole amount of the PAS resin (A), is preferably 3 parts by mass, and the upper limit of the range is preferably 120 parts by mass. With respect to the calcium carbonate (D), one which has been known to those skilled in the art can be used, and the calcium carbonate (D) is preferably in the form of powder particles, and the upper limit of the range of the average particle diameter of the particles is preferably 50 µm, especially preferably 45 µm. The average particle diameter is a value (D₅₀) determined by a Coulter counter method. The lower limit of the range of the average particle diameter of the calcium carbonate (D) is preferably 1 µm.

### <Wax (E)>

In the resin composition of the invention, for improving the release properties of the resin composition in the cylinder used in the melt-molding or in the mold for injection, it is preferred that a wax (E) is incorporated into the resin composition. As mentioned above, from the viewpoint of improving the prevention of drooling of the resin composition, a wax having an acid value of 15 or less is preferably used, and a wax having an acid value of 13 or less is more preferably used. Examples of such waxes include an olefin wax and an ester wax. From the viewpoint of achieving both the improvement of the release properties of the resin composition and the suppression of marked drooling of the resin composition, the lower limit of the range of the amount of the wax (E) incorporated, relative to 100 parts by mass of the whole amount of the PAS resin (A), is preferably 0.005 part by mass, more preferably 0.1 part by mass. Further, the upper limit of the range of the amount of the wax (E) incorporated is preferably 5 parts by mass, more preferably 2.5 parts by mass.

### <Olefin polymer>

In the resin composition of the invention, from the viewpoint of improving both the molding flowability and the thermal shock properties of the molded article with good balance, an olefin polymer is incorporated into the resin composition. Examples of olefin polymers include a polymer obtained by polymerization of one of or two or more of α-olefins, such as ethylene, propylene, 1-butene, 1-pentene, 4-methyl-1-pentene, and isobutylene, and a copolymer of the above-mentioned α-olefin and an **α,β**-unsaturated acid, such as (meth)acrylic acid, methyl (meth)acrylate, ethyl (meth)acrylate, or butyl (meth)acrylate, or an alkyl ester thereof. In the invention, the term " (meth) acryl" means acryl and/or methacryl.

From the viewpoint of improving compatibility of the olefin polymer with the other components of the resin composition, the olefin polymer preferably has a functional group in the polymer thereof. By virtue of this, it is possible to improve the thermal shock properties of the molded article and the like. Examples of the functional groups include an epoxy group, a carboxyl group, an isocyanate group, an oxazoline group, and a group represented by the formula: R(CO)O(CO)- or R(CO)O- (wherein R represents an alkyl group having 1 to 8 carbon atoms). The olefin polymer having such a functional group can be obtained by, for example, copolymerization of an α-olefin and a polymerizable vinyl compound having the functional group. Examples of polymerizable vinyl compounds having the functional group include the above-mentioned **α,β**-unsaturated acids and alkyl esters thereof, maleic acid, fumaric acid, itaconic acid, and other **α,β**-unsaturated dicarboxylic acids having 4 to 10 carbon atoms and derivatives thereof (such as a mono- or diester, and an acid anhydride thereof), and glycidyl (meth)acrylate. Among the above olefin polymers, as the olefin polymer (B), an olefin polymer having at least one functional group selected from the group consisting of an epoxy group, a carboxyl group, and a group represented by the formula: R(CO)O(CO)- or R(CO)O-(wherein R represents an alkyl group having 1 to 8 carbon atoms) is preferred in view of the toughness and impact resistance, and particularly, an olefin resin containing a copolymer of an alkene, an alkyl acrylate, and glycidyl acrylate is preferred.

The lower limit of the range of the amount of the olefin polymer incorporated, relative to 100 parts by mass of the whole amount of the PAS resin (A), is preferably 5 parts by mass, more preferably 7 parts by mass. On the other hand, the upper limit of the range of the amount of the olefin polymer incorporated is preferably 17 parts by mass, more preferably 15 parts by mass. When the amount of the olefin polymer contained is designed to be in the above range, both the molding flowability and the thermal shock properties of the molded article can be improved with good balance.

### <Other components>

Further, in the resin composition of the invention, in addition the above-mentioned components, a synthetic resin, for example, a synthetic resin other than the above-mentioned polyarylene sulfide resin (A), wax (E), and olefin copolymer (hereinafter, referred to simply as "synthetic resin"), such as an epoxy resin, a polyester resin, a polyamide resin, a polyimide resin, a polyether imide resin, a polycarbonate resin, a polyphenylene ether resin, a polysulfone resin, a polyether sulfone resin, a polyether ether ketone resin, a polyether ketone resin, a polyarylene resin, a polyethylene resin, a polypropylene resin, a polytetrafluoroethylene resin, a polydifluoroethylene resin, a polystyrene resin, an ABS resin, a phenolic resin, an urethane resin, or a liquid crystalline polymer, can be further incorporated as an optional component appropriately according to the use. In the invention, the synthetic resin is not an essential component, but, when the synthetic resin is incorporated, with respect to the amount of the synthetic resin incorporated, there is no particular limitation as long as the effects of the invention are not sacrificed, and the amount of the synthetic resin varies depending on the purpose and cannot be generally specified, but the amount of the synthetic resin incorporated into the resin composition of the invention is, for example, substantially in the range of 5 to 15 parts by mass, relative to 100 parts by mass of the PAS resin (A). In other words, the ratio of the PAS resin (A) to the total of the PAS resin (A) and the synthetic resin, in terms of a mass, is preferably in the range of (100/115) or more, more preferably in the range of (100/105) or more.

Further, in the resin composition of the invention, an additive known and commonly used, such as a coloring agent, an antistatic agent, an antioxidant, a heat stabilizer, an ultraviolet light stabilizer, an ultraviolet light absorber, a foaming agent, a flame retardant, a flame retardant auxiliary, a rust preventive agent, or a coupling agent, may be additionally incorporated as an optional component if necessary. The above additive is not an essential component, but, when the additive is incorporated, with respect to the amount of the additive incorporated, there is no particular limitation as long as the effects of the invention are not sacrificed, and the amount of the additive incorporated varies depending on the purpose and cannot be generally specified, but, for example, is preferably in the range of 0.01 part by mass or more, preferably in the range of 1,000 parts by mass or less, relative to 100 parts by mass of the PAS resin (A), and may be appropriately selected according to the purpose and use so that the effects of the invention are not sacrificed.

Further, the resin composition of the invention can further contain a filler other than the zeolite (B), glass fiber (C), and calcium carbonate (D) as an optional component. With respect to the filler used as an optional component, any material known and commonly used can be used as long as the effects of the invention are not sacrificed, and examples include fillers in various forms, such as those which are in a fibrous form, and those which are in a non-fibrous form, e.g., a particulate form or a plate form. Specifically, a fibrous filler, e.g., a fiber, such as a carbon fiber, a ceramic fiber, an aramid fiber, a metallic fiber, potassium titanate, silicon carbide, calcium silicate, or wollastonite, or a natural fiber can be used, and a non-fibrous filler, such as glass beads, glass flakes, barium sulfate, clay, pyrophyllite, bentonite, sericite, mica, mica, talc, attapulgite, ferrite, calcium silicate, magnesium carbonate, a milled fiber, or calcium sulfate, can be used. With respect to the amount of the contained filler used as an optional component in the invention, there is no particular limitation as long as the effects of the invention are not sacrificed. The amount of the contained filler used as an optional component, for example, relative to 100 parts by mass of the PAS resin (A), is preferably in the range of 1 part by mass or more, more preferably 10 parts by mass or more, preferably 200 parts by mass or less, more preferably 120 parts by mass or less. When the amount of the filler is in the above range, the resin composition advantageously exhibits excellent mechanical strength and moldability.

### (Method for producing a resin composition)

The method for producing a resin composition of the invention comprises mixing a polyarylene sulfide resin (A), zeolite (B), a glass fiber (C), and calcium carbonate (D) as essential components and, if necessary, a wax (E) and another optional component, and melt-kneading the resultant mixture at the melting point of the PAS resin or higher.

In the preferred method for producing a resin composition of the invention, a resin composition can be produced through the step of charging the essential components and the optional components in various forms, such as a form of powder, pellet, or flake, into a ribbon blender, a Henschel mixer, a V-blender, or the like and dry-blending the mixture, and then charging the mixture into a known melt-kneader, such as a Banbury mixer, a mixing roll, a single-screw or twin-screw extruder, or a kneader, and melt-kneading the mixture at a temperature in such a range that the resin temperature becomes the melting point of the PAS resin or higher, preferably at a temperature in such a range that the resin temperature becomes (the melting point of the PAS resin + 10°C) or higher, more preferably at a temperature in such a range that the resin temperature becomes (the melting point of the PAS resin + 10°C) to (the melting point of the PAS resin + 100°C), further preferably at a temperature in such a range that the resin temperature becomes (the melting point of the PAS resin + 20) to (the melting point of the PAS resin + 50°C). The components may be added to a melt-kneader at the same time and mixed, and may be added portion by portion to a melt-kneader.

With respect to the melt-kneader, from the viewpoint of the dispersibility and productivity, a twin-screw kneading extruder is preferred, and, for example, it is preferred that melt-kneading is performed while appropriately controlling the discharge rate of the resin component to be in the range of 5 to 500 (kg/hr) and the screw revolution speed to be in the range of 50 to 500 (rpm), and it is further preferred that melt-kneading is performed under conditions such that the ratio of the discharge rate to the screw revolution speed (discharge rate/screw revolution speed) is in the range of 0.02 to 5 (kg/hr/rpm). Further, with respect to the above-mentioned components, when a filler or an additive is added, it is preferred that the filler or additive is charged into the twin-screw kneading extruder from the side feeder of the extruder from the viewpoint of the dispersibility. With respect to the position of the side feeder, the ratio of the distance between the extruder resin charge portion (top feeder) and the side feeder to the whole length of the screw of the twin-screw kneading extruder is preferably 0.1 or more, more preferably 0.3 or more. Further, the ratio is preferably 0.9 or less, more preferably 0.7 or less.

The resin composition of the invention obtained by melt-kneading as mentioned above is a melt-kneaded mixture containing the essential components and an optional component added if necessary and a component derived therefrom, and it is preferred that, after the melt-kneading, for example, the resin composition in a molten state is extruded into a strand form by a known method, and then processed into a form of pellet, chip, granule, powder, or the like, and, if necessary, pre-drying at a temperature in the range of 100 to 150°C and subjected to molding. The extrusion into a strand form may have the step of melting the resin composition of the invention preferably in a shear region at a shear rate of 500 sec⁻¹ or less, more preferably in a shear region at a shear rate of 100 sec⁻¹ or less and 0 sec⁻¹ or more.

The polyarylene sulfide resin composition of the invention produced by the above-mentioned method contains, in addition to the PAS resin, zeolite (B) as well as glass fiber (C) and calcium carbonate (D), and the mass ratio of the glass fiber (C) to the calcium carbonate (D) ((C)/(D)) is optimized to be in the range of 1 to 13. Therefore, both an increase of the melt viscosity of the resin composition in a low-shear region and an increase of the melt crystallization temperature of the resin composition are achieved. Accordingly, the resin composition upon melt-molding achieves excellent prevention of drooling. When the resin composition further contains the wax (E) having an acid value of 15 or less, both the release properties and prevention of drooling are excellent.

### (Method for producing a molded article)

The molded article of the invention is obtained by, for example, melt-molding the above-mentioned resin composition. The method for producing a molded article of the invention has the step of melt-molding the above-mentioned resin composition. Further, the method for producing a molded article of the invention may have the step of melting the resin composition preferably in a shear region at a shear rate of 500 sec⁻¹ or less, more preferably in a shear region at a shear rate of 100 sec⁻¹ or less and 0 sec⁻¹ or more. The melt-molding may be a known method, and various molding methods, for example, injection molding, compression molding, extrusion, such as composite extrusion, sheet extrusion, or pipe extrusion, pultrusion, blow molding, or transfer molding can be used, but particularly injection molding is suitable because excellent prevention of drooling of the resin composition as a raw material is achieved. When molding is conducted by injection molding, with respect to the molding conditions, there is no particular limitation, and molding can be performed by a general method. For example, molding may be performed through the step of melting the polyarylene sulfide resin composition in an injection molding machine at a temperature in such a range that the resin temperature becomes the melting point of the polyarylene sulfide resin or higher, preferably at a temperature in such a range that the resin temperature becomes (the melting point of the resin + 10°C) or higher, more preferably at a temperature in such a range that the resin temperature becomes (the melting point of the resin + 10°C) to (the melting point of the resin + 100°C), further preferably at a temperature in such a range that the resin temperature becomes (the melting point of the resin + 20) to (the melting point of the resin + 50°C), and then injecting the resin composition into a mold from the resin discharge outlet. In this instance, the range of the mold temperature is a known temperature range, for example, preferably room temperature (23°C) or higher, more preferably 40°C or higher, further preferably 120°C or higher. Further, the mold temperature is preferably 300°C or lower, more preferably 200°C or lower, further preferably 180°C or lower.

### (Use of the molded article)

Examples of main uses of the molded article of the invention include electric and electronic parts, such as housings for various household appliances and electronic devices, e.g., a mobile phone and a PC (Personal Computer), protecting or supporting members for box-type electric or electronic part integrated module, individual semiconductors or modules, a sensor, an LED lamp, a connector, a socket, a resistor, a relay casing, a switch, a coil bobbin, a capacitor, a variable capacitor casing, an optical pickup, an oscillator, various types of terminal blocks, a transformer, a plug, a printed substrate, a tuner, a loudspeaker, a microphone, a headset, a small-size motor, a magnetic head base, a power module, a terminal block, a semiconductor, a liquid crystal, an FDD carriage, an FDD chassis, a motor brush holder, a satellite dish, and computer-related parts; household and office appliance parts, such as VTR parts, television parts, an iron, a hair dryer, rice cooker parts, microwave oven parts, acoustic parts, sound and picture device parts, e.g., an audio and laser disc, a compact disc, a DVD disc, and a Blu-ray disc, lighting parts, refrigerator parts, air conditioner parts, typewriter parts, word processor parts, and water-related appliance parts, e.g., a water level or temperature sensor for a hot-water supply apparatus and bath; machine-related parts, such as office computer-related parts, telephone-related parts, facsimile-related parts, copying machine-related parts, cleaning jigs, motor parts, a lighter, and a typewriter; optical device- and precision machine-related parts, such as a microscope, a binocular, a camera, and a clock; automobile- and vehicle-related parts, such as an alternator terminal, an alternator connector, a brush holder, a slip ring, an IC regulator, a potentiometer base for light diya, a relay block, an inhibitor switch, various types of valves, e.g., an exhaust gas valve, fuel-related, exhaust and intake pipes, an air intake nozzle snorkel, an intake manifold, a fuel pump, an engine cooling water joint, a carburetor main body, a carburetor spacer, an exhaust gas sensor, a cooling water sensor, an oil temperature sensor, a brake pad wear sensor, a throttle position sensor, a crank shaft position sensor, an air flow meter, a brake pad wear sensor, a thermostat base for air conditioner, a heater heated-air flow control valve, a brush holder for radiator motor, a water pump impeller, a turbine vane, wiper motor-related parts, a distributor, a starter switch, an ignition coil and a bobbin thereof, a motor insulator, a motor rotor, a motor core, a starter relay, a wire harness for transmission, a window washer nozzle, an air conditioner panel switch substrate, a coil for fuel-related solenoid valve, a connector for fuse, a horn terminal, an electrical part insulator, a stepping motor rotor, a lamp socket, a lamp reflector, a lamp housing, a brake piston, a solenoid bobbin, an engine oil filter, an ignition device casing, and casings for containing therein a power module, an invertor, a power device, an intelligent power module, an insulated gate bipolar transistor, a power control unit, a reactor, a convertor, a capacitor, an insulator, a motor terminal block, a battery, an electric compressor, a battery current sensor, a junction block, an ignition coil for DLI system, or the like, and the molded article can be applied to other uses.

### Examples

Hereinbelow, the present invention will be described in more detail with reference to the following specific examples. The "part (s)" and "%" are given by mass unless otherwise specified.

### (Measurement of a melt viscosity of the PPS resin)

Using a Koka-type flow tester (CFT-500D, Shimadzu Corporation), the PPS resin produced in the Production Example below was maintained at 300°C, a load: 1.96 × 10⁶ Pa, and L/D = 10 (mm)/1 (mm) for 6 minutes, and then a melt viscosity was measured.

### (Production Example)

### Production of a PPS resin

### [Step 1]

Into a 150-litter autoclave having an agitating blade and having connected thereto a pressure gauge, a thermometer, a condenser, a decanter, and a rectifying column were charged 33.075 parts by mass (225 parts by mole) of p-dichlorobenzene (hereinafter, abbreviated to "p-DCB"), 3.420 parts by mass (34.5 parts by mole) of NMP, 27.300 parts by mass of a 47.23% by mass aqueous NaSH solution (230 parts by mole of NaSH), and 18.533 parts by mass of a 49.21% by mass aqueous NaOH solution (228 parts by mole of NaOH), and, while stirring, the temperature of the resultant mixture was increased to 173°C over 5 hours in a nitrogen gas atmosphere so that 27.300 parts by mass of water was distilled off, and then the autoclave was closed. The p-DCB distilled due to azeotropic distillation caused during the dehydration was separated by the decanter and instantly returned to the autoclave. After completion of the dehydration, the inside of the autoclave was in a state such that an anhydrous sodium sulfide composition in the form of fine particles was dispersed in p-DCB. The fact that the NMP content of the composition was 0.079 part by mass (0.8 part by mole) showed that 98 mol% (33.7 parts by mole) of the charged NMP had been hydrolyzed to a sodium salt of a ring-opening product of NMP (4-(methylamino)butyric acid) (hereinafter, abbreviated to "SMAB") . The SMAB amount in the autoclave was 0.147 part by mole per 1 mol of the sulfur atom present in the autoclave. The theoretical dehydration amount determined on the assumption that all the charged NaSH and NaOH are changed to anhydrous Na2S is 27.921 parts by mass, and therefore this indicates that, among 0.878 part by mass (48.8 parts by mole) of the water remaining in the autoclave, 0.609 part by mass (33.8 parts by mole) of the water was consumed in the hydrolysis reaction of NMP and NaOH and was not present in the form of water in the autoclave, and 0.269 part by mass (14.9 parts by mole) of the water remained in the autoclave in the form of water, or water of crystallization. The water content in the autoclave was 0.065 mol per 1 mol of the sulfur atom present in the autoclave.

### [Step 2]

After completion of the dehydration step, the temperature in the autoclave was reduced to 160°C, and 46.343 parts by mass (467.5 parts by mole) of NMP was charged and the temperature was increased to 185°C. The water content in the autoclave was 0.025 mol per 1 mol of the NMP charged in the step 2. At a point in time when the gauge pressure reached 0.00 MPa, the valve to which the rectifying column was connected was opened, and the temperature in the autoclave was increased to 200°C over one hour. In this instance, cooling and the degree of opening of the valve were controlled so that the rectifying column outlet temperature became 110°C or lower. The mixed vapor of distilled p-DCB and water was condensed by a condenser and separated by the decanter, and the p-DCB was returned to the autoclave. The amount of the water distilled was 0.228 part by mass (12.7 parts by mole).

### [Step 3]

At the start of the step 3, the water content in the autoclave was 0.041 part by mass (2.3 parts by mole), and was 0.005 mol per 1 mol of the NMP charged in the step 2, and 0.010 mol per 1 mol of the sulfur atom present in the autoclave. Like the step 1, the SMAB amount in the autoclave was 0.147 mol per 1 mol of the sulfur atom present in the autoclave. Then, the temperature in the autoclave was increased from 200°C to 230°C over 3 hours, and the mixture was stirred at 230°C for one hour, and then the temperature was increased to 250°C and the mixture was stirred for one hour. At a point in time when the temperature in the autoclave was 200°C, the gauge pressure was 0.03 MPa, and the final gauge pressure was 0.40 MPa. Among the slurry obtained after cooling, 0.650 part by mass of the slurry was poured into 3 parts by mass (3 parts by litter) of water and the resultant mixture was stirred at 80°C for one hour, and then subjected to filtration. The resultant cake was further washed by stirring it in 3 parts by mass (3 parts by litter) of warm water for one hour, and then subjected to filtration. This operation was repeated four times. 3 Parts by mass (3 parts by litter) of warm water and acetic acid were added to the cake to adjust the pH to 4.0, and then the cake was further washed by stirring for one hour, and then subjected to filtration. The resultant cake was further washed by stirring it in 3 parts by mass (3 parts by litter) of warm water for one hour, and then subjected to filtration. This operation was repeated twice. The resultant cake was dried using a hot-air dryer at 120°C overnight to obtain a PPS resin (A) in the form of a white powder. The melt viscosity of the obtained polymer at 300°C was 42 Pa•s. The non-Newtonian index was 1.07.

### (Raw materials used)

The components of a resin composition as raw materials are shown below.
- PAS resin (A): the PPS resin produced in the above-mentioned Production Example was used.
- Zeolite (B): trade name: "A-type Zeolite A-5 powder", manufactured by Tosoh Corp.
- Glass fiber (C): fiber length: 3 mm; average diameter: 10 µm; trade name: "T-717H", manufactured by Nippon Electric Glass Co., Ltd.
- Calcium carbonate (D): trade name: "Calcium Carbonate First grade", manufactured by Sankyo Seifun Co., Ltd.
- Wax (E)-1: pentaerythritol tetrastearate; trade name: "VPG861", manufactured by Emery Oleochemicals Japan Ltd.
- Wax (E)-2: polyethylene wax; trade name: "PE-190", manufactured by Clariant
- Olefin polymer (F): ethylene-glycidyl methacrylate-methyl acrylate copolymer; trade name: "BF-7M", manufactured by Sumitomo Chemical Co., Ltd.

### (Production of a resin composition)

According to the components of the composition and the amounts (all indicated by parts by mass) shown in Table 1, the materials were uniformly mixed by means of a tumbler. Then, the mixture of the materials was charged into a vented twin-screw extruder (TEX30**α**, manufactured by The Japan Steel Works, Ltd.), and melt-kneaded at a resin component discharge rate of 30 kg/hr, at a screw revolution speed of 220 rpm, and at a resin temperature set to 320°C, obtaining pellets of the resin compositions in Examples 1 to 10 and Comparative Examples 1 to 3.

### (Measurement of a melt crystallization temperature of the resin composition)

The resin composition was melted at 350°C, and then quenched to prepare a non-crystalline film, and, from the prepared film, about 10 mg of the film was weighed and a melt crystallization temperature (°C) was measured using a differential scanning calorimeter ("DSC 8500", manufactured by Perkin Elmer Co., Ltd.).

### (Production of a molded article)

Using the pellets of the resin compositions in reference Examples 1 to 8 and 10, Example 9 and Comparative Examples 1 to 3, the pellets were fed to an injection molding machine (SE75D-HP), manufactured by Sumitomo Heavy Industries, Ltd., having a cylinder temperature set to 310°C, and subjected to injection molding using a mold having a mold temperature controlled to 140°C.

### (Drooling amount of the resin composition)

Using the pellets of the resin compositions in Examples 1 to 10 and Comparative Examples 1 to 3, the pellets were fed to an injection molding machine (SE75D-HP), manufactured by Sumitomo Heavy Industries, Ltd., having a cylinder temperature set to 310°C, and subjected to continuous molding. After completion of metering of the 10th shot, a drooling amount for 30 seconds from the nozzle tip was measured.

**[Table 1]**

| | | | Exp. 1 | Exp. 2 | Exp. 3 | Exp. 4 | Exp. 5 | Exp. 6 | Exp. 7 | Exp. 8 | Exp. 9 | Exp. 10 | Comp. Exp. 1 | Comp. Exp. 2 | Comp. Exp. 3 |
|---|---|---|---|---|---|---|---|---|---|---|---|---|---|---|---|
| PAS | | (A) | 100 | 100 | 100 | 100 | 100 | 100 | 100 | 100 | 100 | 100 | 100 | 100 | 100 |
| Zeolite | A-5 | (B) | 1.0 | 2.0 | 6.1 | 10.7 | 2.0 | 2.0 | 2.0 | 2.0 | 2.2 | 2.0 | 2.0 | 2.0 | |
| Glass fiber | T-717H | (C) | 64.3 | 65.0 | 67.6 | 70.5 | 65.3 | 66.0 | 82.7 | 55.1 | 72.1 | 65.0 | 88.6 | 39.4 | 63.7 |
| Mineral | Calcium carbonate | (D) | 29.2 | 29.5 | 30.7 | 32.1 | 29.7 | 30.0 | 11.8 | 39.4 | 32.8 | 29.5 | 5.9 | 55.1 | 29.0 |
| Wax | VPG861 (Acid value: 2) | (E)-1 | 0.4 | 0.4 | 0.4 | 0.4 | 1.0 | 2.0 | 0.4 | 0.4 | 0.4 | | 0.4 | 0.4 | 0.4 |
| | PE-190 (Acid value: 0) | (E) -2 | | | | | | | | | | 0.4 | | | |
| Olefin copolymer | BF-7M | (F) | | | | | | | | | 10.9 | | | | |
| total | | | 194.9 | 196.9 | 204.9 | 213.7 | 198.0 | 200.0 | 196.9 | 196.9 | 218.3 | 196.9 | 196.9 | 196.9 | 193.1 |
| (Glass fiber (C)/Calcium carbonate (D)) | | | (2.2) | (2.2) | (2.2) | (2.2) | (2.2) | (2.2) | (7.0) | (1.4) | (2.2) | (2.2) | (15.0 ) | (0.7) | (2.2) |
| Melt crystallization temperature (°C) of resin composition | | | 233 | 234 | 234 | 231 | 236 | 239 | 243 | 235 | 233 | 234 | 231 | 235 | 225 |
| Drooling amount (g) | | | 0.6 | 0.5 | 0.5 | 0.4 | 0.7 | 0.8 | 0.4 | 0.6 | 0.6 | 0.7 | 1.4 | 1.9 | 2.2 |

From the results shown in Table 1, it is apparent that, when injection molding is conducted using the resin compositions in Examples 1 to 10, the drooling amount is reduced. In contrast, with respect to the resin composition in Comparative Example 1, it is found that the (C)/(D) ratio is large, and hence the melt viscosity of the resin composition in a low-shear region cannot be increased, so that the drooling amount is increased. Similarly, with respect to the resin composition in Comparative Example 2, it is found that the (C)/(D) ratio is small, and hence the melt viscosity of the resin composition in a low-shear region cannot be increased, so that the drooling amount is increased. Further, with respect to the resin composition in Comparative Example 3, it is found that the resin composition does not contain zeolite, and hence the melt crystallization temperature of the resin composition is lowered, so that the drooling amount is increased.

## Claims

1. A resin composition containing a polyarylene sulfide resin (A), zeolite (B), a glass fiber (C), calcium carbonate (D) and an olefin polymer, wherein
the mass ratio of the glass fiber (C) to the calcium carbonate (D) ((C)/(D)) is in the range of 1 to 13, and
the amount of the glass fiber (C) is 100 parts by mass or less relative to 100 parts by mass of the whole amount of the polyarylene sulfide resin (A).

2. The resin composition according to claim 1, further containing a wax (E) having an acid value of 15 or less.

3. The resin composition according to claim 1 or 2, which is a melt-kneaded mixture.

4. The resin composition according to any one of claims 1 to 3, wherein the amount of the olefin polymer is 5 parts by mass or more and 17 parts by mass or less relative to 100 parts by mass of the whole amount of the polyarylene sulfide resin (A).

5. A molded article which is obtained by molding the resin composition according to any one of claims 1 to 4.

6. A method for producing a resin composition, having the step of melt-kneading a polyarylene sulfide resin (A), zeolite (B), a glass fiber (C), calcium carbonate (D) and an olefin polymer at the melting point of the polyarylene sulfide resin (A) or higher, wherein
the mass ratio of the glass fiber (C) to the calcium carbonate (D) ((C)/(D)) is in the range of 1 to 13, and
the amount of the glass fiber (C) is 100 parts by mass or less relative to 100 parts by mass of the whole amount of the polyarylene sulfide resin (A).

7. The method for producing a resin composition according to claim 6, which has the step of melting the resin composition in a shear region at a shear rate of 500 sec⁻¹ or less.

8. The method according to claim 6 or 7, wherein the amount of the olefin polymer is 5 parts by mass or more and 17 parts by mass or less relative to 100 parts by mass of the whole amount of the polyarylene sulfide resin (A).

9. A method for producing a molded article, having the steps of:
producing a resin composition by the method according to any one of claims 6 to 8; and
melt-molding the resin composition.

10. The method for producing a molded article according to claim 9, which has the step of melting the resin composition in a shear region at a shear rate of 500 sec⁻¹ or less.

## Patentansprüche

1. Harzzusammensetzung, enthaltend ein Polyarylensulfidharz (A), Zeolith (B), eine Glasfaser (C), Calciumcarbonat (D) und ein Olefinpolymer, wobei
das Massenverhältnis der Glasfaser (C) zum Calciumcarbonat (D) ((C)/(D)) im Bereich von 1 bis 13 liegt und
die Menge der Glasfaser (C) 100 Masseteile oder weniger, bezogen auf 100 Masseteile der Gesamtmenge des Polyarylensulfidharzes (A), beträgt.

2. Harzzusammensetzung nach Anspruch 1, die ferner ein Wachs (E) mit einer Säurezahl von 15 oder weniger enthält.

3. Harzzusammensetzung nach Anspruch 1 oder 2, die eine schmelzgeknetete Mischung ist.

4. Harzzusammensetzung gemäß einem der Ansprüche 1 bis 3, wobei die Menge des Olefinpolymers 5 Masseteile oder mehr und 17 Masseteile oder weniger, bezogen auf 100 Masseteile der Gesamtmenge des Polyarylensulfidharzes (A), beträgt.

5. Formkörper, der durch Formen der Harzzusammensetzung gemäß einem der Ansprüche 1 bis 4 erhalten wird.

6. Verfahren zur Herstellung einer Harzzusammensetzung, mit dem Schritt des Schmelzknetens eines Polyarylensulfidharzes (A), eines Zeoliths (B), einer Glasfaser (C), von Calciumcarbonat (D) und eines Olefinpolymers bei dem Schmelzpunkt des Polyarylensulfidharzes (A) oder höher, wobei
das Massenverhältnis der Glasfaser (C) zum Calciumcarbonat (D) ((C)/(D)) im Bereich von 1 bis 13 liegt und
die Menge der Glasfaser (C) 100 Masseteile oder weniger, bezogen auf 100 Masseteile der Gesamtmenge des Polyarylensulfidharzes (A), beträgt.

7. Verfahren zur Herstellung einer Harzzusammensetzung gemäß Anspruch 6, das den Schritt des Schmelzens der Harzzusammensetzung in einem Scherbereich bei einer Schergeschwindigkeit von 500 sec⁻¹ oder weniger umfasst.

8. Verfahren nach Anspruch 6 oder 7, wobei die Menge an Olefinpolymer 5 Masseteile oder mehr und 17 Masseteile oder weniger, bezogen auf 100 Masseteile der Gesamtmenge an Polyarylensulfidharz (A), beträgt.

9. Verfahren zur Herstellung eines Formteils, das die folgenden Schritte umfasst:
Herstellen einer Harzzusammensetzung nach dem Verfahren gemäß einem der Ansprüche 6 bis 8; und
Schmelzformen der Harzzusammensetzung.

10. Verfahren zur Herstellung eines Formteils gemäß Anspruch 9, das den Schritt des Schmelzens der Harzzusammensetzung in einem Scherbereich bei einer Schergeschwindigkeit von 500 sec⁻¹ oder weniger umfasst.

## Revendications

1. Composition de résine contenant une résine de polyarylène sulfure (A), une zéolite (B), une fibre de verre (C), du carbonate de calcium (D) et un polymère oléfinique, dans laquelle
le rapport massique entre la fibre de verre (C) et le carbonate de calcium (D) ((C)/(D)) est compris entre 1 et 13, et
la quantité de fibre de verre (C) est inférieure ou égale à 100 parties en masse pour 100 parties en masse de la quantité totale de résine de polyarylène sulfure (A).

2. Composition de résine selon la revendication 1, contenant en outre une cire (E) ayant un indice d'acide inférieur ou égal à 15.

3. Composition de résine selon la revendication 1 ou 2, qui est un mélange malaxé à l'état fondu.

4. Composition de résine selon l'une quelconque des revendications 1 à 3, dans laquelle la quantité de polymère oléfinique est de 5 parties en masse ou plus et de 17 parties en masse ou moins par rapport à 100 parties en masse de la quantité totale de résine de polyarylène sulfure (A).

5. Article moulé obtenu par moulage de la composition de résine selon l'une quelconque des revendications 1 à 4.

6. Procédé de production d'une composition de résine, comprenant l'étape consistant à malaxer à l'état fondu une résine de polyarylène sulfure (A), une zéolite (B), une fibre de verre (C), du carbonate de calcium (D) et un polymère oléfinique à la température de fusion de la résine de polyarylène sulfure (A) ou à une température supérieure, dans lequel
le rapport massique de la fibre de verre (C) au carbonate de calcium (D) ((C)/(D)) est compris entre 1 et 13, et
la quantité de fibre de verre (C) est inférieure ou égale à 100 parties en masse pour 100 parties en masse de la quantité totale de résine de polyarylène sulfure (A).

7. Procédé de production d'une composition de résine selon la revendication 6, qui comprend l'étape consistant à faire fondre la composition de résine dans une zone de cisaillement à une vitesse de cisaillement de 500 sec⁻¹ ou moins.

8. Procédé selon la revendication 6 ou 7, dans lequel la quantité de polymère oléfinique est de 5 parties en masse ou plus et de 17 parties en masse ou moins par rapport à 100 parties en masse de la quantité totale de résine de polyarylène sulfure (A).

9. Procédé de fabrication d'un article moulé, comprenant les étapes suivantes :
production d'une composition de résine selon le procédé selon l'une quelconque des revendications 6 à 8 ; et
moulage par fusion de la composition de résine.

10. Procédé de fabrication d'un article moulé selon la revendication 9, qui comprend l'étape consistant à faire fondre la composition de résine dans une zone de cisaillement à une vitesse de cisaillement inférieure ou égale à 500 s⁻¹.
